# EUROPÄISCHE PATENTSCHRIFT

(11) **EP 2 555 066 B1**
(45) Veröffentlichungstag und Bekanntmachung des Hinweises auf die Patenterteilung: **24.05.2023**
(21) Anmeldenummer: 12174537.6
(22) Anmeldetag: 02.07.2012
(51) Int. Cl.: G05B 13/00, G06Q 10/06, B41F 33/00, B41F 33/02, G05B 19/418

(54) **Automatische Druckmaschinenverbesserung**
Automatic printing press improvement
Amélioration d'imprimantes automatique

(30) Priorität: 04.08.2011 DE 102011109388
(43) Veröffentlichungstag der Anmeldung: 06.02.2013
(73) Patentinhaber: Heidelberger Druckmaschinen AG, 69115 Heidelberg (DE)
(72) Erfinder: Galm, Uwe, 68723 Oftersheim (DE); Mießl, Manfred, 69469 Weinheim (DE); Oelsner, Tom, 64390 Erzhausen (DE)

(56) Entgegenhaltungen:
- DE-A1-102006 022 710
- DE-A1-102006 026 730
- US-A- 5 712 782
- US-A1- 2006 078 859
- US-B1- 6 636 893

## Beschreibung

Die vorliegende Erfindung betrifft ein Verfahren zur Verbesserung des Betriebs von Maschinen oder Geräten mit einem zugeordneten Maschinenrechner, welche über ein Kommunikationsnetzwerk mit wenigstens einem weiteren Rechner verbunden sind.

Inzwischen ist es bei vielen Maschinen, wie z. B. Werkzeugmaschinen oder Druckmaschinen üblich, dass diese Maschinen über eine Internetverbindung mit einem Rechner zur Fernwartung verbunden sind. Auf diese Art und Weise können Probleme an den Maschinen einfach und schnell durch Änderungen gewisser Einstellungen über das Internet behoben werden, ohne dass Servicepersonal vor Ort zum Einsatz kommen muss. Dies gewährleistet eine schnelle Wartung und ist zudem deutlich kostengünstiger, als wenn Servicepersonal vor Ort eingesetzt werden müsste. Die für die Fernwartung genutzte Kommunikationsinfrastruktur in Form von Rechnern mit Internetanbindung kann jedoch noch für weitere Zwecke genutzt werden. So ist aus der bisher unveröffentlichten deutschen Patentanmeldung DE 10 2010 019 063.2 ein System zur Analyse von Produktionsprozessen bei Druckmaschinen bekannt, bei dem die Produktionsleistung einer Maschine mit der Produktionsleistung anderer Maschinen verglichen wird. Auch hier verfügen die Maschinen über zugeordnete Rechner, welche über ein Netzwerk mit einem zentralen Rechner verbunden sind, welcher die Leistungen der Maschinen vergleicht. In Abhängigkeit der von den Maschinenrechnern gelieferten Daten berechnet der Leistungsvergleichsrechner dann die Produktionszeiten vergleichbarer Maschinen und sendet das Ergebnis des Leistungsvergleichs an den jeweiligen Maschinenrechner. Auf diese Art und Weise kann der Betreiber einer Maschine erkennen, wie er im Vergleich zu anderen vergleichbaren Maschinenbetreibern dasteht. In einem zweiten Schritt kann der Betreiber der Maschine außerdem Verbesserungsvorschläge vom Leistungsvergleichsrechner erhalten, welche ihm ein effizienteres Betriebsverfahren ermöglicht. Dazu werden ihm auf Wunsch passende Produkte und Dienstleistungen des Herstellers über den Leistungsvergleichsrechner übermittelt, welche der Betreiber entsprechend bestätigen kann. Diese Vorgehensweise hat jedoch den Nachteil, dass dem Betreiber der Maschine lediglich Vorschläge übermittelt werden, aber nicht konkret die Einstellungen seiner vorhandenen Maschinen optimiert werden.

Aus dem deutschen Patent DE 10 2008 015 222 B4 ist ein Verfahren zur Überwachung eines Klimaanlagensystems in einem Gebäude bekannt. Auch hier weisen die Klimaanlagen in dem Gebäude einen Anschluss an einen Rechner auf, welcher die Daten der Klimaanlagen überwacht und auswertet. Anhand der ausgewerteten Daten werden in dem Rechner optimierte Kennlinien zur Steuerung der Klimaanlagen in dem Gebäude berechnet und dann an die Klimaanlagen versandt, um die Einstellungen der Klimaanlagen in dem Gebäude zu optimieren. Nachteilig an diesem Verfahren ist jedoch, dass der Rechner zur Berechnung von Kennlinien lediglich die Klimaanlagen in einem Gebäude berücksichtigt und so nicht von den Einstellungen der Klimaanlagen in anderen vergleichbaren Gebäuden profitiert.

Eine sichere Fernbedienung für Fernwartung geht aus dem Patent US 7,328,347 B2 hervor. Das Patent US 7,287,473 B2 dient der Erfassung von Betriebszuständen bei Druckmaschinen.

Das Patent US 6,636,893 B1 offenbart ein elektronisches Energie- und Gebäudemanagementsystem, bei dem der Nutzer eines beteiligten Systems automatisch an mehreren anderen Teilsystemen angemeldet wird. Das System erlaubt weiterhin die Ansammlung von Daten von mehreren Teilsystemen bei einem Teilsystem mittels einer elektronischen Netzverbindung. Das gesamte System führt eine Filterfunktion durch, wie zum Beispiel das Verfolgen des Energieverbrauchs, die Analyse des Energieverbrauchs aufgrund der Verbrauchshistorie sowie eine Analyse der Belastung des Stromnetzes. Weiterhin umfasst das System das Analysieren von Energiekosten sowie die Voraussage des Energieverbrauchs, zum Beispiel in Abhängigkeit einer Wettervorhersage. Auf diese Art und Weise lässt sich der Energieverbrauch von Gebäuden optimieren. Durch die Netzwerkstruktur kann ein zuständiger Facility-Manager leicht neue Gebäude in das System integrieren und dessen Daten nutzen. Die Analyse und die Optimierung des Energieverbrauchs finden durch den Facility-Manager oder eine andere Person statt.

Die Offenlegungsschrift DE 10 2010 019 063 A1 betrifft ein System mit einem Rechner zu Anzeige der Produktionsleistung einer Maschine im Vergleich mit der Produktionsleistung anderer Maschinen, wobei die Maschinen über eine Netzwerkverbindung mit einem Rechner zur Durchführung eines Leistungsvergleichs verbunden sind. Das System ist so eingerichtet, dass zumindest dem Betreiber einer Maschine über die Anzeige des Rechners zur Anzeige der Produktionsleistung Vergleichsdaten des Rechners für den Leistungsvergleich angezeigt werden.

Aus der Offenlegungsschrift DE 10 2006 026 730 A1 geht ein Verfahren zur Optimierung der Betriebsergebnisse in einem Wirtschaftsunternehmen mit Einzelauftragsfertigung hervor, das mehrere Einzelbetriebsdaten sowie Betriebsdatengruppen enthält. Dabei werden zunächst in einem gesonderten Informationszentrum sämtliche einzelnen Betriebsdaten erfasst und als Ist-Betriebsdaten gespeichert. Diese erfassten Ist-Betriebsdaten werden dann zu einem Ist-Betriebsdatengesamtergebnis eines bestimmten, frei wählbaren Zeitraums zusammengefasst. In das Informationszentrum werden einzelne Soll-Betriebsdaten eingegeben, die einem Soll-Betriebsdatengesamtergebnis entsprechen. Danach werden die Ist-Betriebsdaten mit den Soll-Betriebsdaten verglichen und die sich daraus ergebenden Unterschiedsdaten als Plan-Betriebsdaten zur Optimierung des Soll-Betriebsdatengesamtergebnis verwendet. Auf diese Art und Weise wird der Betrieb eines Unternehmens optimiert.

Die Offenlegungsschrift DE 10 2006 022 710 A1 zeigt ein Verfahren zur Durchführung von Wartungs- oder Servicevorgängen bei Maschinen, welche über wenigstens einen Rechner verfügen, wobei der Rechner der Maschine über ein öffentlich zugängliches Netzwerk mit einem Verwaltungsrechner kommuniziert. Dabei ist vorgesehen, dass Service- oder Wartungsbedarf vom Rechner über das öffentlich zugängliche Kommunikationsnetz an den Verwaltungsrechner gemeldet wird und dass der Verwaltungsrechner aus wenigstens einer empfangenen Fehlermeldung eine Checkliste zur Abarbeitung der notwendigen Service- und Wartungsmaßnahmen erstellt und an den Rechner der Maschine versendet. Dazu identifiziert der Verwaltungsrechner den Maschinenrechner, der die Fehlermeldung abgesendet hat, um die Fehlermeldung dem entsprechenden Maschinenrechner zuordnen zu können.

Die Patentschrift US 5,712,782 offenbart ein Verfahren zur Optimierung des Betriebs einer Gruppe von Landmaschinen durch einen zentralen Rechner, welcher Daten eines Onboard-Rechners der Landmaschinen empfängt und diese Daten zur Optimierung der jeweiligen Landmaschine verwendet. Auf diese Art und Weise werden die Betriebseinstellungen der jeweiligen Landmaschine verbessert.

Die Patentanmeldung US 2006/0078859 A1 offenbart ein System und ein Verfahren zur Beobachtung und zur Reaktion auf Gerätebedingungen. Dazu ist ein Content Server vorgesehen, welcher die Bedingungen eines Geräts überwacht. Wenn eine Bedingung auftritt, welche eine Handlung benötigt, wie z.B. ein Gerätefehler, wird auf den Content Server mit seiner Datenbank zugegriffen, wobei der Content Server Informationen zu dem überwachten Gerät enthält. Auf diese Art und Weise kann der Fehler bestimmt werden. Nachdem der Fehler identifiziert ist, wird auf eine Datenbank mit einer Bibliothek von Anweisungen zugegriffen, und der Content Server wählt die passende Anweisung aus, um dem Benutzer des Geräts die Behandlung des Fehlers zu erleichtern. Sobald der Content Server die korrekte Anweisung ausgewählt hat, wird die Anweisung an einen Rechner des Geräts geliefert, welcher einen Bildschirm aufweist. Die gelieferten Anweisungen umfassen vorzugsweise ein Video, so dass der Benutzer des Geräts einfach den Anweisungen auf dem Bildschirm folgen kann und so das Problem lösen kann. Weitere Bedingungen, welche Handlungen erfordern, umfassen Wartungsbedarf, Lernbedingungen und Hilfeanfragen von Benutzern.

Es ist daher Aufgabe der vorliegenden Erfindung, ein Verfahren zur Verbesserung des Betriebs von Maschinen oder Geräten mit einem zugeordneten Maschinenrechner zu schaffen, welches die Berechnung verbesserter Einstellungen der Maschinen ermöglicht und dabei eine möglichst breite Basis von ähnlichen Maschinen zugrunde legt.

Diese Aufgabe wird erfindungsgemäß durch Patentanspruch 1 gelöst. Vorteilhafte Ausgestaltungen der Erfindung sind den Unteransprüchen und den Zeichnungen zu entnehmen. Gemäß der vorliegenden Erfindung ist vorgesehen, dass die Maschinen oder Geräte, deren Betrieb verbessert werden soll, einen zugeordneten Maschinenrechner aufweisen. Dieser Maschinenrechner ist über ein Kommunikationsnetzwerk wie das Internet mit wenigstens einem weiteren Rechner verbunden. Dieser weitere Rechner kann ebenfalls einer Maschine zugeordnet sein oder er kann ein zentraler Rechner beim Hersteller oder Serviceprovider sein. Die Erfindung eignet insbesondere zur Verbesserung von Druckmaschinen, Falzmaschinen und anderen Maschinen in der graphischen Industrie.

Dem zentralen und dezentralen Verfahren ist gemeinsam, dass Maschinen eindeutig identifizierbar sein müssen und eine Kommunikation mit anderen Maschinen durchführen können. Hierzu werden die bekannten Verfahren und Techniken des internetbasierten Fernwartungsservice verwendet, bei dem Maschinen eindeutig identifiziert an einer Servicezentrale oder mittels eines Management Computers verwaltet werden. Zur Identifizierung dienen üblicherweise eine eindeutige Maschinennummer oder auch digitale Zertifikate. Zur Teilnahme an erfindungsgemäßen Verfahren wird die Maschine durch den Maschinenbediener/Servicetechniker freigeschaltet. Sie übermittelt dann ihre Identität mit weiteren Kommunikationsparametern an den zentralen Rechner und wird so initial registriert. Vor Nutzung des erfindungsgemäßen Verfahrens registriert sich die Maschine bei der Servicezentrale, die beim zentralen Verfahren alleiniger Kommunikationspartner ist. Bei dezentralen Verfahren übernimmt der zentrale Rechner nur die Aufgabe eines Management Computers und gibt nur die Information über die Erreichbarkeit weiterer Kommunikationspartner weiter und vermittelt gegebenenfalls noch die Verbindung zu diesen weiteren Teilnehmern.

Bei der Ausgestaltung mit einem zentralen Rechner ist vorgesehen, dass der zentrale Rechner Betriebsdaten und Druckauftragsdaten einer Druckmaschine sowie zugehörige Kennlinien empfängt, die ihm von jedem teilnehmenden Maschinenrechner am Ende eines Auftrags zu festgelegten Zeitpunkten , z.B. einmal täglich, oder auf Anfrage des Zentralrechners übermittelt werden. Dabei ist vorgesehen, dass die Betriebsdaten und Druckauftragsdaten des Maschinenrechners zu dem weiteren zentralen Rechner über das Internet übertragen und in dem weiteren zentralen Rechner abgespeichert werden. Der weitere Rechner vergleicht dann die Leistungen wenigstens einer Maschine mit der Leistung weiterer Maschinen und stellt so fest, ob für die dem Maschinenrechner zugeordnete Maschine verbesserte Einstellungen z. B. in Form von Kennlinien möglich sind. Wenn dies der Fall ist, so berechnet der weitere Rechner diese verbesserten Kennlinien und speichert diese zentral ab.

In einem zweiten Verfahrensschritt fragt vor Ausführung eines Druckauftrags der Maschinenrechner mit den Auftragsdaten und lokalen Einstellungen bei dem zentralen weiteren Rechner an, ob optimierte Kennlinien/Einstellungen vorliegen. Diese übermittelt der zentrale weitere Rechner zurück an den Maschinenrechner, der diese Einstellungen entweder automatisch oder nach manueller Zustimmung durch den Maschinenbediener übernimmt.

Auf diese Art und Weise ist es möglich, dass die Einstellungen vieler Maschinen bei der Optimierung der Einstellung einer anderen Maschine berücksichtigt werden und so eine Maschine von den Einstellungen vieler weiterer Maschinen profitieren kann.

In einer Ausgestaltung der Erfindung ist es auch möglich, dass der Zentralrechner alle optimierten Kennlinien/Einstellungen zu festgelegten Zeitpunkten an die Maschinenrechner übermittelt. Bevorzugt ist jedoch wegen der großen Datenmenge und Aktualität der Daten die Variante der Anfrage vor Start des Druckauftrags.

Neben der zentralen Berechnung und Auswertung über einen Server beim Hersteller oder Serviceprovider ist insbesondere eine alternative Ausgestaltung der Erfindung interessant, wonach der weitere Rechner ebenfalls einer Maschine zugeordnet ist. In diesem Fall speichern alle beteiligten Maschinenrechner ihre Betriebsdaten und zugehörigen Auftragsdaten/Einstellungen als Erfahrungswissen lokal ab. Vor dem Start eines Druckauftrags versendet ein anfragender Rechner die Auftragsdaten und Betriebsdaten mit den Maschineneinstellungen. Jeder Rechner jeder Maschine empfängt die Daten der anfragenden Maschinen, soweit technisch erreichbar, und wertet diese selbst passend für die dem jeweiligen Maschinenrechner zugeordnete Maschine aus.

In einer bevorzugten Ausführungsvariante werden vom Anfrager nur diejenigen anderen Maschinenrechner angefragt, von denen er sich einen Erfahrungsgewinn erwartet, z. B. nur Rechner, die der Formatklasse der zugehörigen Druckmaschine zugeordnet sind. Bei der dezentralen Variante kann der zweite Maschinenrechner einfach die Daten empfangen und feststellen, ob er einen solchen Druckauftrag mit den zugehörigen Einstellungen schon selbst hatte und diese Information an den anfragenden Rechner zurücksenden. Jeder Maschinenrechner speichert hier seine eigenen vollständigen Auftragsdaten mit den Erfahrungen aus den Einstellungen und Leistungen bei der Abarbeitung des Druckauftrags ab. Die Anfrage kann auch ohne Speicherung der Anfragedaten beantwortet werden, indem einfach passendes Erfahrungswissen zurückgesendet wird. Ob dieses wirklich besser als die lokale Einstellungen oder die Beste aller Erfahrungen ist, wertet beim dezentralen Ansatz der anfragende Rechner selbst aus denn das Berechnen und Entscheiden soll erfindungsgemäß der anfragende Rechner übernehmen, die verteilten Maschinenrechner steuern lediglich ihr Erfahrungswissen bei. Da der anfragende Maschinenrechner die Auswertung und Berechnung übernimmt, müssen die Daten nicht wieder an die Maschine zurückgesendet werden, sondern können unmittelbar im Maschinenrechner, welcher der betroffenen Maschine zugeordnet ist, als Betriebsdaten verwendet werden. Diese Ausgestaltung der Erfindung hat vor allen Dingen den großen Vorteil, dass keine zentrale Datenhaltung aller Auftrags- und Betriebsdaten notwendig ist und die Betriebsdaten als Erfahrungswissen auch nicht zum Zweck der zentralen Speicherung übertragen werden müssen. Nachteilig an dieser Ausführungsform ist allerdings, dass nur zum Zeitpunkt der Anfrage aktive Maschinenrechner ihr Erfahrungswissen mitteilen können sowie dass die Maschinenrechner selbst über einen ausreichend großen Speicher verfügen müssen, um alle lokalen Erfahrungen speichern zu können. Diesen Nachteil kann man aber dadurch ausgleichen, dass die Maschinenrechner ihre Daten auf sogenannten Cloud-Rechnern im Internet zusätzlich abspeichern, wobei die Cloud-Rechner immer online sind, so dass auf die Daten der Cloud-Rechner von anfragenden Maschinenrechnern immer zugegriffen werden kann, auch wenn angefragte Maschinenrechner selbst offline sind.

In einer Ausgestaltung der Erfindung ist vorgesehen, dass die Rechner der Maschinen identifiziert werden und dass nur Rechner Daten von anderen Rechnern empfangen und auswerten können, welche selbst Daten zum Datenaustausch freigegeben haben. Diese Ausgestaltung der Erfindung ist sowohl bei der zentralen als auch bei der dezentralen Lösung sinnvoll. Zunächst müssen die Maschinen eindeutig im Kommunikationsnetzwerk identifizierbar sein, so dass ihnen entsprechende Daten zugesendet und zugeordnet werden können. Des Weiteren muss der Betreiber der Maschine zustimmen, dass die Betriebsdaten seiner eigenen Maschine an die anderen Rechner übertragen werden. Sollte der Betreiber der Maschine diesen Datenaustausch verweigern, so kann er nicht an dem erfindungsgemäßen Verfahren teilnehmen und erhält keine verbesserten Einstellungen. Auf diese Art und Weise wird sichergestellt, dass nur diejenigen Betreiber von Maschinen von verbesserten Einstelldaten anderer Maschinen profitieren, welche selbst bereit sind, ebenfalls zur Verbesserung der Einstellung aller Maschinen beizutragen.

In einer weiteren Ausgestaltung der Erfindung ist vorgesehen, dass die optimierten Kennlinien oder Einstellungen auf einer Anzeige des Rechners der Maschine angezeigt werden und dass die Übernahme der optimierten Kennlinien oder Einstellungen durch Betätigung eines Bedienelements des Rechners der Maschine akzeptiert oder abgelehnt werden kann. Dem Betreiber der Maschine wird so die Möglichkeit gegeben, die für ihn ermittelte Verbesserung der Kennlinien oder Einstellungen zunächst selbst zu überprüfen. Erst wenn der Betreiber der Maschine mit den verbesserten Einstellwerten zufrieden ist, so kann er über Maus, Tastatur oder ein anderes Bedienelement wie einen Touchscreen am Rechner der Maschine die Übernahme der verbesserten Kennlinien bestätigen und zur Einstellung der eigenen Maschine übernehmen. Der Betreiber der Maschine ist zu jeder Zeit Herr darüber, welche Verbesserungen der Einstellungen an seiner Maschine vorgenommen werden, und er muss nicht damit rechnen, dass ohne sein Wissen Einstellungen an der Maschine verändert werden.

In einer weiteren Ausgestaltung der Erfindung ist vorgesehen, dass vor der Verwendung der Kennlinien oder Einstellungen einer anderen Maschine zum Betreiben der Maschine die Kompatibilität der anderen Maschine zu der Maschine durch einen Rechner überprüft wird und die Daten nur verwendet werden, wenn eine ausreichende Kompatibilität gegeben ist. Insbesondere bei Druckmaschinen gibt es selbst bei einem Maschinentyp viele unterschiedliche kundenspezifische Anpassungen. So ist die Anzahl der Druckwerke und die der Peripheriegeräte variabel, und es können zusätzlich vom Kunden gewünschte Änderungen vorgenommen werden. Aus diesem Grund ist es nicht ohne Weiteres möglich, die Einstellungen eines Maschinentyps mit den Einstellungen des gleichen Maschinentyps zu übernehmen, da selbst ein und derselbe Maschinentyp sehr unterschiedlich ausgestaltet sein kann. Vor der Übernahme der verbesserten Kennlinien oder Einstellungen wird daher zuerst geprüft, ob die verbesserten Kennlinien oder Einstellungen zu der tatsächlichen Konfiguration der verwendeten Maschine auch kompatibel sind. Falls die Kompatibilität durch eine rechnerische Korrektur der Daten z. B. von Farbeinstellungen von sechs Farben auf vier Farben möglich ist, so werden die Daten zunächst in eine kompatible Form umgerechnet und dann auch verwendet. Wenn aber selbst durch eine Umrechnung keine Kompatibilität der verbesserten Einstellungen zu der verwendeten Maschine möglich ist, so werden die verbesserten Kennlinien oder Einstellungen nicht verwendet.

Vorteilhafterweise ist außerdem vorgesehen, dass die Betriebs- oder Auftragsdaten der Maschinen in verschiedene Klassen eingeteilt werden und am Rechner der Maschine die Freigabe einzelner Klassen zum Datenaustausch erfolgen kann. So kann der Betreiber zunächst selbst entscheiden, welche Daten er für den Datenaustausch an andere Rechner freigeben will und welche er auch tatsächlich verbessern will. In Druckmaschinen gibt es viele Einstellmöglichkeiten, z. B. Einstellungen der Farbwerke, Feuchtwerke, Druckwerke, des Registers, Einstellungen am Anleger, Ausleger etc. Der Betreiber der Maschine kann nun selbst auswählen, welche dieser Einstellmöglichkeiten er überhaupt optimieren lassen will. Wenn er z. B. nur die Einstellung der Farbwerke optimieren will, so wählt er diese Klasse aus und gibt diese zum Datenaustausch frei. Allerdings erhält er im Gegenzug dann auch nur verbesserte Betriebsdaten für die Einstellung der Farbwerke. Auch hier wird wiederum sichergestellt, dass ein Betreiber einer Maschine nur von verbesserten Betriebsdaten profitieren kann, die er selbst auch bereit ist, anderen zur Verfügung zu stellen. Auf der anderen Seite muss der Betreiber, wenn er lediglich an der Optimierung bestimmter Kennlinien interessiert ist, nicht gleich sämtliche Daten anderen Maschinenbetreibern zur Verfügung stellen, wenn er dies z. B. aus Wettbewerbsgründen nicht möchte.

In einer besonders vorteilhaften Ausgestaltung der Erfindung ist vorgesehen, dass die Rechner der Maschine über eine Anzeigevorrichtung verfügen, dass die an dem Kommunikationswerk angemeldeten Rechner der Maschinen auf der Anzeige darstellbar sind und dass eine Auswahlmöglichkeit zur Einbindung gewünschter Rechner der Maschinen in den Datenaustausch zur Übertragung von Betriebsdaten und/oder Auftragsdaten auswählbar ist. Diese Art der Ausgestaltung der Erfindung eignet sich vor allem für die dezentrale Lösung, wo die einzelnen Rechner der Maschinen direkt über das Internet miteinander kommunizieren. In diesem Fall kann sich der Betreiber der Maschine über den in der Maschine und einen dem Maschinenrechner zugeordneten Bildschirm eine Liste aller an dem erfindungsgemäßen Verfahren teilnehmenden Rechner anzeigen lassen. Über eine Suchfunktion kann der Betreiber auch gezielt Namen von ihm bekannten Druckereien oder Betreibern eingeben und sich deren Maschinerechner, soweit sie an dem Kommunikationsnetzwerk angemeldet sind, anzeigen lassen. Diese Rechner können in Form kleiner Bildchen auf dem Bildschirm angezeigt werden, denen wiederum Eigenschaften der Maschine und/oder des Betreibers zugeordnet sind. Der Betreiber der Maschine kann dann die ihm genehmen Maschinen auswählen und z. B. über eine Maus anklicken und in den Datenaustausch einbinden. Dies kann ähnlich zu sozialen Netzwerken wie z. B. Facebook geschehen, indem der Betreiber der Maschine eine Maschine als "befreundet" auswählt und so in sein Netzwerk zum Datenaustausch mit einbezieht. So können die Betreiber der Maschinen sich in dem Kommunikationsnetzwerk in unterschiedlichen Nutzergruppen organisieren, wobei es selbstverständlich möglich ist, dass ein und derselbe Betreiber einer Maschine mehreren Nutzergruppen angehört. Auf diese Art und Weise ist es möglich, ein soziales Netzwerk zum Austausch von Betriebsdaten und/oder Auftragsdaten bei Maschinen zur Optimierung dieser Maschinen aufzubauen.

In einer weiteren Ausgestaltung der Erfindung ist vorgesehen, dass das Kommunikationsnetzwerk aus einer Vielzahl von Rechnern besteht, welche die Betriebsdaten und/oder Auftragsdaten der Rechner der Maschine entgegennehmen und abspeichern, verbesserte Kennlinien oder Einstellungen berechnen und an den jeweiligen Rechner der Maschine passend zurücksenden. Neben der Einbeziehung der beteiligten Maschinenrechner ist es so möglich, an das Internet angeschlossene Rechner zur Verarbeitung der Betriebs- und/oder Auftragsdaten an der Berechnung verbesserter Kennlinien zu beteiligen, so wie dies bei dem sogenannten "Cloud-Computing" der Fall ist. Diese Lösung hat den großen Vorteil, dass auch bei der dezentralen Lösung die durchaus hohe Rechnerleistung erfordernde Berechnung verbesserter Kennlinien und des Leistungsvergleichs nicht auf dem zugehörigen Maschinenrechner, welcher möglicherweise gerade mit anderen Berechnungen ausgelastet ist, vorgenommen werden muss, sondern sie kann auf irgendwelchen ans Internet angeschlossenen Rechnern stattfinden, welche gerade nicht voll ausgelastet sind. So kann ein Maschinenrechner jeweils einen zugehörigen Cloud-Computer aufweisen welcher immer mit dem Internet verbunden ist und auch am Datenaustausch teilnehmen kann, wenn der zugehörige Maschinenrechner abgeschaltet oder offline ist. Auch die Abspeicherung der Betriebsdaten und/oder Auftragsdaten und der verbesserten Kennlinien erfolgt hierbei nicht nur auf dem Maschinenrechner selbst, sondern kann ebenfalls in der "Computer Cloud" erfolgen, so dass auch Speicherplatz auf den Maschinenrechnern gespart werden kann.

Die vorliegende Erfindung wird nachfolgend anhand mehrerer Figuren näher beschrieben und erläutert. Es zeigen:
- Figur 1: ein Netzwerk aus Maschinenrechner und einem zentralen Rechner zur Berechnung von verbesserten Kennlinien für Druckmaschinen,
- Figur 2: ein Netzwerk, bei dem die verbesserten Kennlinien dezentral in den Maschinenrechnern berechnet werden, und
- Figur 3: ein Netzwerk mit Cloud-Computern.

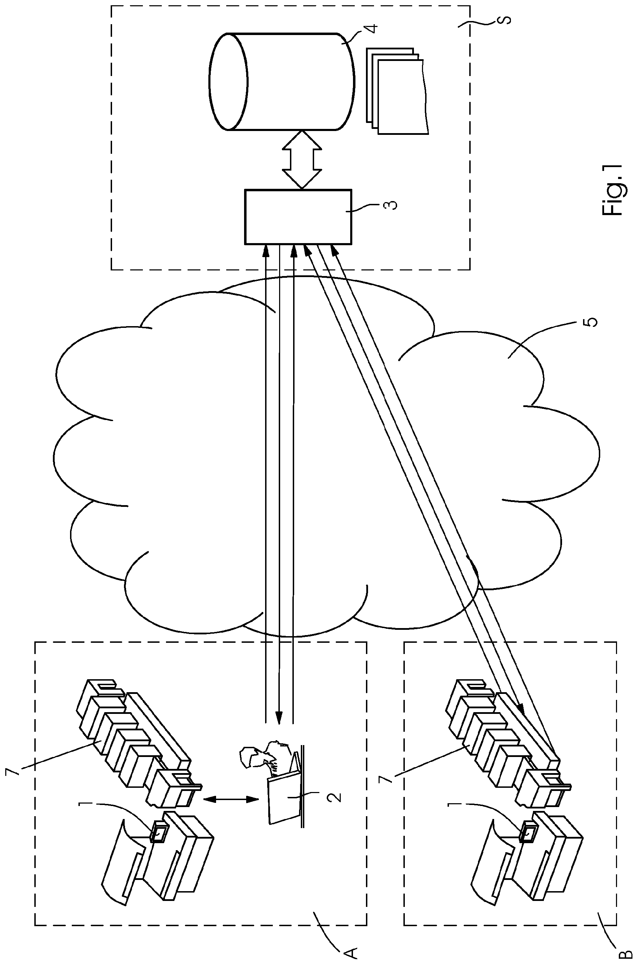

In Figur 1 ist eine Ausgestaltung der Erfindung gezeigt, welche mit einem zentralen Rechner 3 beim Serviceprovider S funktioniert. Es gibt grundsätzlich 2 Prozesse, erstens eine Anfrage mit Auftragsdaten vor dem Druckvorgang und zweitens Übermittlung der Erfahrungsdaten des abgearbeiteten Druckauftrags an die Zentrale. Beispielhaft sind in Figur 1 zwei Druckereien A, B abgebildet, welche jeweils über eine Druckmaschine 7 mit einem zugeordneten Druckmaschinenrechner 1 verfügen. In der Druckerei A ist außerdem auch noch ein Drucksaalserver 2 vorhanden, welcher mit dem Druckmaschinenrechner 1 und der Druckmaschine 7 kommuniziert. Der Drucksaalserver 2 ist dabei über eine Netzwerkverbindung mit dem Internet 5 verbunden, welches wiederum mit dem Verwaltungsrechner 3 beim Serviceprovider S verbunden ist. Der Verwaltungsrechner 3 nimmt sämtliche von den Druckmaschinenrechnern 1 und dem Drucksaalserver 2 versandten Betriebs- und/oder Auftragsdaten entgegen und legt sie in einer Datenbank 4 ab. Dazu sendet vor Beginn eines neuen Druckauftrags der Druckmaschinenrechner 1 oder der Drucksaalserver 2 über das Internet 5 alle für die jeweilige Druckmaschine 7 leistungsrelevanten Einstellungen an den Verwaltungsrechner 3. Der Verwaltungsrechner 3 empfängt diese Daten und sucht in der Datenbank 4 nach passenden hinterlegten Maschinenprofilen und nach bei vorhergehenden Druckaufträgen optimierten Einstellungen, insbesondere Kennlinien zur Ansteuerung der jeweiligen Druckmaschine 7. Diese neuen verbesserten Einstellungen sendet der Verwaltungsrechner 3 über das Internet 5 an den Druckmaschinenrechner 1 bzw. den Drucksaalserver 2 zurück. Die so verbesserten Einstellungen können entweder automatisch übernommen werden oder vom Bediener bzw. Leiter der Druckerei am Druckmaschinenrechner 1 oder Drucksaalserver 2 durch Betätigung eines Bedienelements am Rechner 1,2 bestätigt werden. Nach der Übernahme der verbesserten Einstelldaten wird der neue Druckauftrag mit diesen verbesserten Einstelldaten durchgeführt. Nach der Beendigung des Druckauftrags werden wiederum alle leistungsrelevanten Daten und auch die tatsächlich verwendeten Einstellungen an den zentralen Verwaltungsrechner 3 zurückgeschickt und in der Datenbank 4 als Erfahrungswissen hinterlegt. Dann kann dieses Erfahrungswissen einfach nur abgespeichert werden und die Berechnungen der Einstellungen erfolgen zum nächsten Anfragezeitpunkt, oder der Verwaltungsrechner 3 berechnet sofort nach der Übertragung der Erfahrung verbesserte Einstellungen. Dabei werden immer auch die Daten sämtlicher in der Datenbank 4 hinterlegten Betriebsdaten anderer Druckmaschinen 7 mit ausgewertet, so dass der Betreiber einer Druckmaschine 7 von den Einstellungen anderer Druckmaschinen 7 profitieren kann. Auf Basis der miteinander verglichenen Einstellungen passender Druckmaschinen 7 und Druckaufträge werden die optimalen Einstellungen berechnet und in der Datenbank 4 hinterlegt.

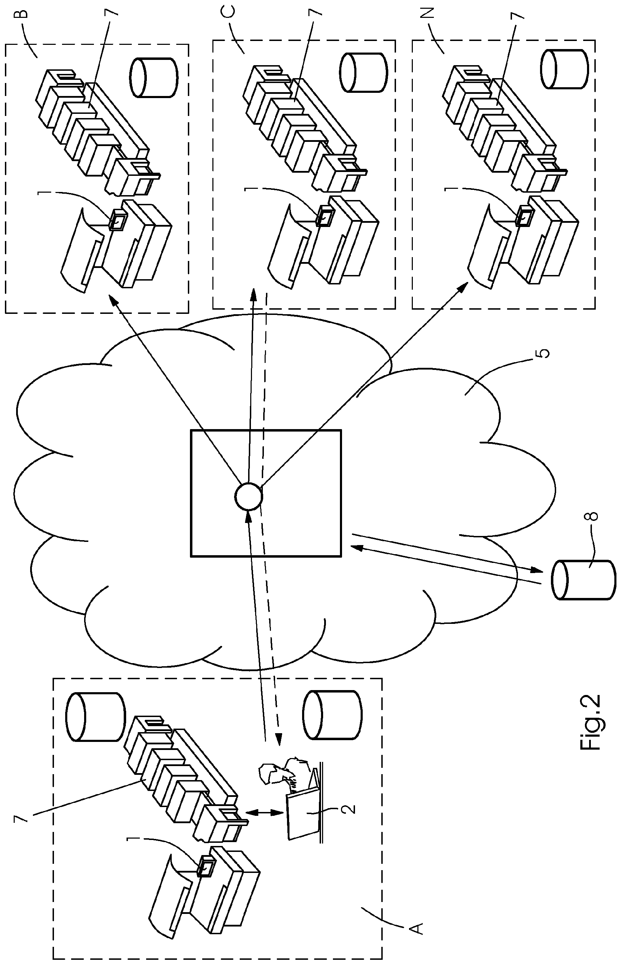

Die Figur 2 zeigt eine weitere Ausgestaltung der Erfindung, bei denen das erfindungsgemäße Verfahren dezentral organisiert ist. Bei dieser Ausgestaltung der Erfindung ist es möglich, dass die teilnehmenden Maschinen 7 ihr Wissen direkt austauschen, und die Rolle einer zentralen Datenverarbeitung wie in Figur 1 entfällt, hier muss kein Erfahrungswissen mehr zentral zurückübertragen und gespeichert werden. Beispielhaft sind in Figur 2 vier Druckereien A, B, C, N abgebildet, welche jeweils über eine Druckmaschine 7 und einen Druckmaschinenrechner 1 verfügen. In der Druckerei A ist zusätzlich wiederum ein Drucksaalserver 2 vorhanden. Auch hier sind sämtliche Rechner 1, 2 über das Internet 5 miteinander verbunden. Betriebsdaten der jeweiligen Maschinen 7 werden jedoch nicht mehr zentral an einen Verwaltungsrechner 3 gesendet, sondern direkt über das Internet 5 an die passenden Maschinen 7 übertragen. Dazu sind in den Maschinenrechnern 1 bzw. dem Drucksaalserver 2 jeweils die Eigenschaften der zugehörigen Maschine 7 abgespeichert, so dass nur Druckmaschinenrechner 1 bzw. Drucksaalserver 2 Betriebsdaten miteinander austauschen, deren Maschinen 7 zueinander passen. Auf diese Art und Weise wird vermieden, dass inkompatible Maschinen 7 die Einstellungen anderer Maschinen 7 eher verschlechtern als verbessern. Die Erfahrungsdaten werden in diesem Fall lokal auf den Rechnern 1,2 der Maschinen 7 gespeichert, die anderen Rechner 1,2 beantworten nur die Anfrage einer Maschine 7. Es wird nichts vorab ausgetauscht.

Die Druckmaschinen 7 sind für dieses Verfahren eindeutig identifiziert und registriert. Der Registrierungsvorgang kann manuell über ein Internetportal durchgeführt werden oder automatisch anhand z.B. der eindeutig zugeordneten Seriennummer der Druckmaschine 7 erfolgen. Den Datenaustausch der Rechner 1,2 untereinander über das Internet 5 regelt ein Management Computer 8, welcher die Anfragen eines Rechners 1 an die entsprechenden anderen Rechner 1,2 leitet, der Management-Computer 8 nimmt jedoch keine Betriebsdaten oder Auftragsdaten entgegen und muss auch keine verbesserten Maschineneinstellungen berechnen, das geschieht ausschließlich auf dem Rechner 1,2 der anfragenden Druckmaschine 7. Nur registrierte und identifizierte Druckereien A, B, C, N können an dem Austausch der Betriebsdaten teilnehmen.

Bei der Ausgestaltung gemäß Figur 2 übernimmt nicht ein Serviceprovider S die Verbesserung und Verwaltung der Betriebsdaten, sondern es wird vielmehr eine Plattform verwaltet vom Management Computer 8 zum Datenaustausch von Betriebsdaten und Auftragsdaten zwischen teilnehmenden Rechnern 1, 2 bereitgestellt. Darum geht der Betriebsdatenaustausch dabei so von statten, dass eine Maschine eine Anfrage an alle an das Internet 5 angeschlossenen und freigegebenen weiteren Rechner 1, 2 sendet. Diese Anfrage enthält bestimmte Daten der Druckmaschine 7, deren Einstellungen, insbesondere Kennlinien, zu verbessern sind. Alle teilnehmenden Rechner 1, 2, welche mit dazu passenden Maschinen 7 übers Internet 5 verbunden sind, antworten dann und stellen entsprechend kompatible Betriebsdaten in der Antwort zur Verfügung, welche wiederum über das Internet 5 an den einen Rechner 1, 2 übertragen wird. Die so erhaltenen Antworten verwendet der Rechner 1, 2 dann zur Optimierung der eigenen Einstellungen wie z. B. der Kennlinien der zugehörigen Druckmaschine 7 und speichert die verbesserten Betriebsdaten auch lokal auf dem Rechner 1, 2 ab. Der Rechner 1, 2 selbst beantwortet auf die gleiche Art und Weise Anfragen anderer Rechner 1, 2, welche über das Internet 5 an dem Austausch von Betriebsdaten teilnehmen. Der Datenaustausch unter den Rechnern 1,2 lässt sich optimieren, wenn von den teilnehmenden Rechnern 1,2 Statusinformationen und Konfigurationen der Druckmaschine 7 bekannt. Es werden dann von vorherein nur die Teilnehmer angefragt, von denen eine verwertbare Erfahrung auf Grund einer Maschinenähnlichkeit zu erwarten ist.

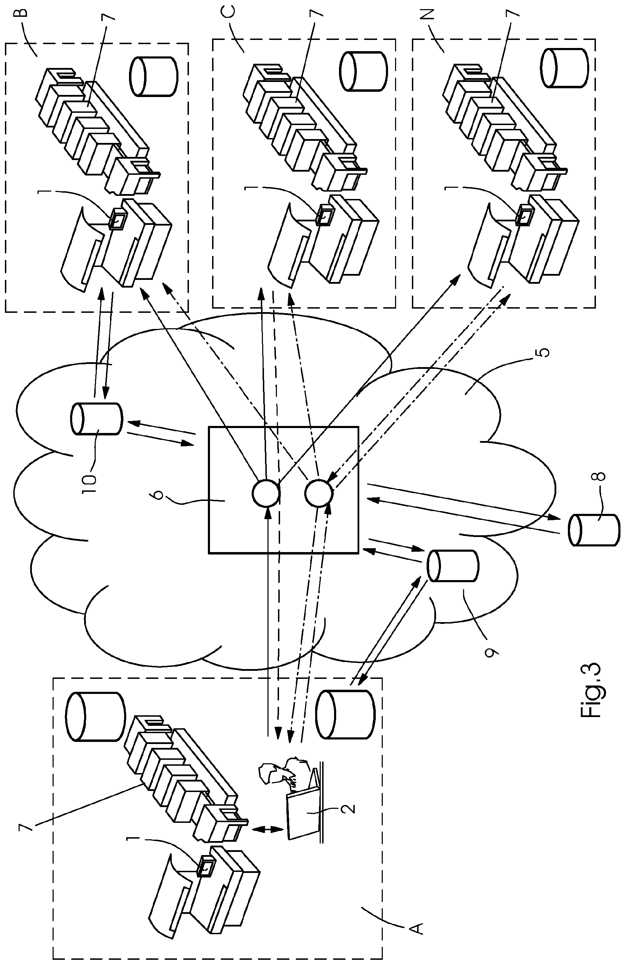

Auch die Ausführungsform in Figur 3 ist dezentral organisiert, auch hier verwaltet ein Management Computer 8 den Datenaustausch. Die Variante in Fig. 3 unterscheidet sich von der Variante in Figur 2 jedoch dadurch, dass die Berechnung der verbesserten Einstellungen oder Kennlinien nicht oder nicht ausschließlich in dem jeweiligen Rechner 1, 2 der zugehörigen Druckmaschine 7 erfolgt, sondern dass auch andere Rechner 9,10 in dem dezentralen Netzwerk 5 mit Rechnern 6 zur Berechnung und Verwaltung von verbesserten Betriebsdaten herangezogen werden. Beispielhaft sind dabei in Figur 3 sogenannte "Cloud Computer" 9,10 eingezeichnet, welche in der Realität mehrere Rechner im Internet 5 umfassen können, welche einem Rechner 1,2 zugeordnet sind. Die Rechner 9, 10 sind immer mit dem Internet 5 verbunden, so, dass immer die Daten der zugeordneten Rechner 1,2 für Anfragen zur Verfügung stehen und auch immer von den Rechnern 9,10 verbesserte Kennlinien für die Druckmaschinen berechnet werden können, auch wenn die Rechner 1,2 in der Druckerie z.B. nachts abgeschaltet sind oder gewartet werden. Dies bedeutet, dass nicht mehr nur ein Rechner 1, 2 die verbesserten Betriebsdaten berechnet und verwaltet, sondern dass auch andere an das Internet 5 angeschlossene Rechner 9,10 herangezogen werden. Dies hat auch den Vorteil, dass die Rechner 1, 2 in der Druckerei A nicht so stark mit den Berechnungen der verbesserten Betriebsdaten belastet werden und die Rechner 1, 2 so für andere Aufgaben in der Druckerei A weiterhin zur Verfügung stehen.

### Bezugszeichenliste

- 1: Druckmaschinenrechner
- 2: Drucksaalserver
- 3: Verwaltungsrechner
- 4: Datenbank
- 5: Internet
- 6: Internet-Server
- 7: Druckmaschine
- 8: Management Computer
- 9: Cloud-Rechner
- 10: Cloud-Rechner
- A: Druckerei A
- B: Druckerei B
- C: Druckerei C
- N: Druckerei N
- S: Serviceprovider

## Patentansprüche

1. Verfahren zur Verbesserung des Betriebs von Maschinen (7) mit einem zugeordneten Maschinenrechner (1), welche über ein Kommunikationsnetzwerk (5) mit wenigstens einem weiteren Rechner (1,3, 6, 9,10) verbunden sind,
wobei Betriebsdaten und Auftragsdaten des Maschinenrechners (1) zu dem weiteren Rechner (1,3,6,9,10) über das Kommunikationsnetzwerk (5) übertragen und in dem weiteren Rechner (1,3,6) gespeichert werden, wobei der weitere Rechner (1,3,6) die Leistung wenigstens einer Maschine (7) mit der Leistung weiterer Maschinen (7) vergleicht und wobei der weitere Rechner (1,3,6,9,10) für wenigstens eine der Maschinen (7) auf Basis des Leistungsvergleichs verbesserte Einstellungen berechnet und zur Einstellung der Maschine (7) bereitstellt,
**dadurch gekennzeichnet,**
**dass** die Rechner (1) der Maschinen (7) identifiziert werden und dass nur Rechner (1) Daten von anderen Rechnern (1,3,6,9,10) empfangen und auswerten können, welche selbst Daten zum Datenaustausch freigegeben haben.

2. Verfahren nach Anspruch 1,
**dadurch gekennzeichnet,**
**dass** der weitere Rechner (1) ebenfalls einer Maschine (7) zugeordnet ist, dass der weitere Rechner (1) und die anderen Maschinenrechner (1) über das Kommunikationsnetzwerk (5) Betriebsdaten und/oder Auftragsdaten austauschen, dass der weitere Rechner (1) einen Leistungsvergleich auf Basis der Betriebsdaten und/oder Auftragsdaten der anderen Maschinen (7) vornimmt und verbesserte Einstellungen für die zugeordnete Maschine (7) berechnet.

3. Verfahren nach einem der vorhergehenden Ansprüche,
**dadurch gekennzeichnet,**
**dass** die verbesserten Einstellungen auf einer Anzeige des Rechners (1) der Maschine (7) angezeigt werden und dass die Übernahme der verbesserten Einstellungen durch Betätigung eines Bedienelements des Rechners (1) der Maschine (7) akzeptiert oder abgelehnt werden kann.

4. Verfahren nach einem der vorhergehenden Ansprüche,
**dadurch gekennzeichnet,**
**dass** die verbesserten Einstellungen Kennlinien zum Betreiben der Maschine (7) umfassen und dass diese Kennlinien nach Bestätigung über ein Bedienelement am Rechner (1) der Maschine (7) für den Betrieb der Maschine (7) übernommen werden.

5. Verfahren nach einem der vorhergehenden Ansprüche,
**dadurch gekennzeichnet,**
**dass** vor der Verwendung der Betriebsdaten einer anderen Maschine (7) zum Betreiben der Maschine (7) die Kompatibilität der anderen Maschine (7) zu der Maschine (7) durch einen der Rechner (1,3,6,9,10) überprüft wird und die Daten nur verwendet werden, wenn eine ausreichende Kompatibilität gegeben ist.

6. Verfahren nach einem der vorhergehenden Ansprüche,
**dadurch gekennzeichnet,**
**dass** die Betriebs- oder Auftragsdaten der Maschinen (7) in verschiedene Klassen eingeteilt werden und am Rechner (1) der Maschine die Freigabe einzelner Klassen zum Datenaustausch erfolgen kann.

7. Verfahren nach einem der vorhergehenden Ansprüche,
**dadurch gekennzeichnet,**
**dass** die Rechner (1) der Maschine (7) über eine Anzeigevorrichtung verfügen, dass die an dem Kommunikationsnetzwerk (5) angemeldeten Rechner (1) der Maschinen (7) auf der Anzeige darstellbar sind und dass eine Auswahlmöglichkeit zur Einbindung gewünschter Rechner (1) der Maschinen (7) in den Datenaustausch zur Übertragung von Betriebsdaten und/oder Auftragsdaten auswählbar ist.

8. Verfahren nach einem der vorhergehenden Ansprüche,
**dadurch gekennzeichnet,**
**dass** das Kommunikationsnetzwerk (5) aus einer Vielzahl von Rechnern (1, 6,9,10) besteht, welche die Betriebsdaten und/oder Auftragsdaten der Rechner (1) der Maschinen (7) entgegennehmen und abspeichern, verbesserte Einstellungen berechnen und an den jeweiligen Rechner (1) der Maschine (7) passend zurücksenden.

## Claims

1. Method of improving the operation of machines (7) with an associated machine computer (1), the machines (7) connected to at least one further computer (1, 3, 6, 9, 10) via a communication network (5),
wherein operating data and job data of the machine computer (1) are transmitted to the further computer (1, 3, 6, 9, 10,) via the communication network (5) and saved on the further computer (1, 3, 6), wherein the further computer (1, 3, 6) compares the output of at least one machine (7) to the output of further machines (7) and wherein the further computer (1, 3, 6, 9, 10) calculates improved settings for at least one of the machines (7) on the basis of the output comparison and makes the improved settings available for an adjustment of the machine (7),
**characterized**
**in that** the computers (1) of the machines (7) are identified and only computers (1) which have released data for a data exchange themselves may receive and analyze data of other computers (1, 3, 6, 9, 10).

2. Method according to claim 1,
**characterized**
**in that** the further computer (1) is likewise associated with a machine (7), that the further computer (1) and the other machine computers (1) exchange operating data and/or job data via the communication network (5), and that the further computer (1) makes output comparisons on the basis of the operating data and/or job data of the other machines and calculates improved settings for the associated machine (7).

3. The method recited in any one of the preceding claims,
**characterized**
**in that** the improved settings are displayed on a display of the computer (1) of the machine (7) and in that the adoption of the improved settings may be accepted or rejected by operating an operating element of the computer (1) of the machine (7).

4. Method according to any one of the preceding claims,
**characterized**
**in that** the improved settings comprise characteristic curves for operating the machine (7) and that these characteristic curves are adopted for the operation of the machine (7) after confirmation via an operating element on the computer (1) of the machine (7).

5. Method according to any one of the preceding claims,
**characterized**
**in that** before the operating data of another machine (7) are used to operate the machine (7), one of the computers (1, 3, 6, 9, 10) checks whether the other machine (7) is compatible with the machine (7) and that the data are only used if there is sufficient compatibility.

6. Method according to any one of the preceding claims,
**characterized**
**in that** the operating or job data of the machines (7) are divided into different classes and in that individual classes may be released on the computer (1) for a data exchange.

7. Method according to any one of the preceding claims,
**characterized**
**in that** the computers (1) of the machine (7) have a display device, that the machines' (7) computers (1) registered with the communication network (5) are displayable on the display and that an option to select desired computers (1) of the machines (7) for inclusion in the data exchange for transmitting operating data and/or job data are selectable.

8. Method according to any one of the preceding claims,
**characterized**
**in that** the communication network (5) consists of a plurality of computers (1, 6, 9, 10) which receive and save the operating data and/or job data of the computers (1) of the machines (7), calculate improved settings and send them back to the respective computer (1) of the machine (7) in a suitable way.

## Revendications

1. Procédé pour améliorer le fonctionnement de machines (7) avec un ordinateur de machine (1) associé, qui sont connectées via un réseau de communication (5) à au moins un autre ordinateur (1, 3, 6, 9, 10), pour lequel des données de fonctionnement et des données de commande de l'ordinateur de machine (1) sont transmises à l'autre ordinateur (1, 3, 6, 9, 10) par l'intermédiaire du réseau de communication (5) et sont stockées dans l'autre ordinateur (1, 3, 6), pour lequel l'autre ordinateur (1, 3, 6) compare la performance d'au moins une machine (7) avec la performance d'autres machines (7) et pour lequel l'autre ordinateur (1, 3, 6, 9, 10) calcule des réglages améliorés pour au moins une des machines (7) sur la base de la comparaison de performance et les met à disposition pour le réglage de la machine (7),
**caractérisé en ce**
**que** les ordinateurs (1) des machines (7) sont identifiés et que seuls des ordinateurs (1) peuvent recevoir et évaluer des données d'autres ordinateurs (1, 3, 6, 9, 10) qui ont eux-mêmes validé l'échange de données.

2. Procédé selon la revendication 1,
**caractérisé en ce**
**que** l'autre ordinateur (1) est également associé à une machine (7), **en ce que** l'autre ordinateur (1) et les autres ordinateurs de machine (1) échangent des données de fonctionnement et/ou des données de commande par l'intermédiaire du réseau de communication (5), **en ce que** l'autre ordinateur (1) procède à une comparaison de performances sur la base des données de fonctionnement et/ou des données de commande des autres machines (7) et calcule des réglages améliorés pour la machine associée (7).

3. Procédé selon l'une des revendications précédentes,
**caractérisé en ce**
**que** les réglages améliorés sont affichés sur un écran de l'ordinateur (1) de la machine (7) et **en ce que** la reprise des réglages améliorés peut être acceptée ou refusée en actionnant un élément de commande de l'ordinateur (1) de la machine (7).

4. Procédé selon l'une des revendications précédentes,
**caractérisé en ce**
**que** les réglages améliorés incluent des courbes caractéristiques pour le fonctionnement de la machine (7) et **en ce que** ces courbes caractéristiques sont reprises pour le fonctionnement de la machine (7) après confirmation par un élément de commande sur l'ordinateur (1) de la machine (7).

5. Procédé selon l'une des revendications
précédentes,
**caractérisé en ce**
**qu'**avant l'utilisation des données de fonctionnement d'une autre machine (7) pour l'exploitation de la machine (7), la compatibilité de l'autre machine (7) avec la machine (7) est vérifiée par l'un des ordinateurs (1, 3, 6, 9, 10) et que les données ne sont utilisées que si une compatibilité suffisante est établie.

6. Procédé selon l'une des revendications
précédentes,
**caractérisé en ce**
**que** les données de fonctionnement ou de commande des machines (7) sont regroupées en différentes classes et que la validation de classes individuelles pour l'échange de données peut être effectuée sur l'ordinateur (1) de la machine.

7. Procédé selon l'une des revendications
précédentes,
**caractérisé en ce**
**que** les ordinateurs (1) de la machine (7) sont dotés d'un dispositif d'affichage, que les ordinateurs (1) des machines (7) connectés au réseau de communication (5) peuvent être représentés sur l'affichage et qu'une possibilité de sélection pour l'intégration des ordinateurs (1) souhaités des machines (7) dans l'échange de données pour la transmission de données de fonctionnement et/ou de données de commande peut être sélectionnée.

8. Procédé selon l'une des revendications précédentes,
**caractérisé en ce**
**que** le réseau de communication (5) est constitué par un grand nombre d'ordinateurs (1, 6, 9, 10) qui reçoivent et enregistrent les données de fonctionnement et/ou les données de commande des ordinateurs (1) des machines (7), calculent des réglages améliorés et les renvoient de manière adaptée à l'ordinateur (1) respectif de la machine (7).
